# FASCICULE DE BREVET EUROPEEN

(11) **EP 4 021 144 B1**
(45) Date de publication et mention de la délivrance du brevet: **24.07.2024**
(21) Numéro de dépôt: 21215837.2
(22) Date de dépôt: 20.12.2021
(51) Int. Cl.: H05B 6/06

(54) **PROCÉDÉ DE FONCTIONNEMENT D'UNE TABLE DE CUISSON À INDUCTION SUR LAQUELLE EST POSÉ UN ÉLÉMENT FERROMAGNÉTIQUE**
VERFAHREN ZUM BETRIEB EINES INDUKTIONSKOCHFELDS MIT EINEM DARAUF PLATZIERTEN FERROMAGNETISCHEN ELEMENT
METHOD FOR OPERATING AN INDUCTION HOB ON WHICH A FERROMAGNETIC ELEMENT IS PLACED

(30) Priorité: 22.12.2020 FR 2013962
(43) Date de publication de la demande: 29.06.2022
(73) Titulaire: Groupe Brandt, 92500 Rueil-Malmaison (FR)
(72) Inventeur: ANDRE, Xavier, 45000 ORLEANS (FR); OUDART, Pascal, 45240 LA FERTE SAINT AUBIN (FR)
(74) Mandataire: Santarelli

(56) Documents cités:
- EP-A2- 2 242 328
- EP-A2- 2 440 012
- US-A- 4 464 553

## Description

L'invention concerne un procédé de fonctionnement d'une table de cuisson à induction. Elle concerne notamment un procédé de fonctionnement d'une table de cuisson à induction, matricielle ou avec foyers jumelables, c'est-à-dire où une zone de chauffe est constituée d'au moins deux inducteurs pouvant fonctionner ensemble ou indépendamment l'un de l'autre selon s'ils sont recouverts par un seul récipient, ou non.

Une table de cuisson à zone de chauffe variable, c'est-à-dire sans emplacement de chauffage prédéfini, comportant alors des inducteurs selon un agencement matriciel, permet d'identifier où un récipient est posé afin d'activer des inducteurs correspondants, pour chauffer le récipient.

Il est toutefois préférable d'éviter de détecter et chauffer un petit élément ferromagnétique, qui n'est pas un récipient à chauffer, comme par exemple un ustensile de cuisine, par exemple un couvert.

La norme IEC 60335-2-6 impose par exemple qu'un petit élément métallique, modélisé par un rectangle d'acier de dimensions prédéfinies (connu sous le nom de « *fourchette norme* »), soit discriminé, c'est-à-dire ne soit pas détecté ou ne déclenche pas l'activation d'un inducteur au-dessus duquel il se trouve.

Pour cela, dans une table de cuisson à induction à zone de chauffe variable, une étape de détection est réalisée indépendamment sur chaque inducteur. Un seuil de détection d'au moins une grandeur mesurable, représentant souvent au moins un taux de recouvrement, est réglé afin de pouvoir détecter et permettre de chauffer au moins une certaine surface de matériau ferromagnétique, sans toutefois détecter, et chauffer, la fourchette-norme. La surface est possiblement variable suivant le matériau. La table de cuisson comporte alors une carte électronique de puissance, qui peut être autonome, pour mettre en oeuvre l'étape de détection. Une fonction de détection est exécutée au démarrage de l'inducteur et pendant le chauffage ; le résultat de cette fonction de détection est binaire : soit un récipient est présent, soit un récipient est absent. Lorsqu'un récipient est détecté (présent), le chauffage est autorisé. Lorsqu'aucun récipient n'est détecté, i.e. lorsqu'un récipient est détecté absent, le chauffage n'est pas autorisé.

Dans l'état de l'art, le seuil est réglé pour que chaque inducteur ne détecte pas, et ne chauffe pas, la fourchette-norme, ce qui interdit de détecter et chauffer un bord d'un récipient qui recouvrirait un inducteur d'une surface équivalente à la fourchette-norme, ou d'une surface moindre.

Cela nuit à une homogénéité de chauffage du récipient et à une puissance restituable dans le récipient.

Le document US 4 464 553 concerne par exemple un appareil de cuisson par induction comprenant comportant un moyen pour détecter si un objet posé dessus est fait d'un matériau ferromagnétique.

Un objectif de l'invention est ainsi de surmonter ces inconvénients, et notamment de permettre la détection et le chauffage d'une portion de récipient recouvrant un inducteur sur une surface équivalente à celle de la fourchette-norme tout en évitant la détection et le chauffage de la fourchette-norme.

A cet effet, l'invention propose un procédé de fonctionnement d'une table de cuisson à induction, la table de cuisson comportant au moins deux inducteurs, le procédé comportant :
- une étape d'identification d'un ensemble d'inducteurs adjacents recouverts au moins en partie par un élément ferromagnétique, l'ensemble comportant au moins un inducteur recouvert au moins en partie, et l'étape d'identification de l'ensemble comportant :
   - une étape de détection d'un élément ferromagnétique sur un inducteur, pour chaque inducteur de la table de cuisson ; et
   - si un élément ferromagnétique est détecté sur au moins deux inducteurs, une étape de vérification si les au moins deux inducteurs sont adjacents ;
   - une étape de comparaison secondaire, par rapport à un seuil secondaire, d'au moins un paramètre, l'au moins un paramètre étant déterminé en fonction d'au moins une valeur, chaque valeur résultant d'au moins une grandeur physique mesurée pour l'un des inducteurs de l'ensemble ;
et si un résultat de l'étape de comparaison secondaire est positif, le procédé comporte :
- une étape d'activation de chaque inducteur de l'ensemble.

Le résultat de l'étape de comparaison secondaire est positif lorsque le paramètre déterminé traduit qu'au moins un inducteur de l'ensemble est recouvert au moins en partie par un élément ferromagnétique à chauffer.

Un tel procédé s'applique ainsi à tous types de table de cuisson, à savoir une table de cuisson matricielle, ainsi qu'à une table de cuisson à foyer multi-bobines, ou encore à foyers jumelables, où un inducteur peut être de taille trop importante pour discriminer la fourchette-norme par rapport à un bord de récipient à chauffer.

Ainsi, en fonction des cas, un inducteur identifié comme étant recouvert au moins en partie par un élément ferromagnétique peut ne comporter aucun inducteur adjacent qui soit recouvert.

L'ensemble d'inducteurs peut donc ne comporter qu'un inducteur détecté comme recouvert au moins en partie par un élément ferromagnétique.

L'au moins une grandeur physique mesurée est par exemple choisie parmi une tension, un courant, une puissance, ou encore un paramètre de commutation d'un circuit oscillant, ou autre.

Ainsi, par exemple, pour chaque inducteur de la table de cuisson, une ou plusieurs grandeurs physiques sont mesurées et, éventuellement, plusieurs mesures sont combinées.

Cette mesure ou combinaison de mesures permet ainsi de déterminer une valeur pour l'inducteur correspondant.

De préférence, cette valeur est représentative d'un taux de recouvrement d'un inducteur par un élément ferromagnétique.

De préférence, la valeur représentative d'un taux de recouvrement résulte d'une combinaison de mesures de grandeurs physiques.

Selon un exemple, la valeur est proportionnelle au taux de recouvrement d'un inducteur par un élément ferromagnétique. Dans un tel cas, plus l'inducteur est recouvert par un élément ferromagnétique, plus la valeur est élevée.

Selon un autre exemple, la valeur est inversement proportionnelle au taux de recouvrement de l'inducteur par un élément ferromagnétique. Dans un tel cas, plus l'inducteur est recouvert par un élément ferromagnétique, plus la valeur est faible. L'au moins un paramètre peut ensuite être déterminé : soit un paramètre pour chaque inducteur de l'ensemble, soit un paramètre pour plusieurs inducteurs de l'ensemble, soit un paramètre pour tous les inducteurs de l'ensemble (c'est-à-dire un paramètre pour l'ensemble) tandis que l'ensemble comporte alors au moins deux inducteurs.

S'il y a un paramètre par inducteur de l'ensemble, le paramètre, pour un inducteur donné, est déterminé en fonction de la valeur précédemment déterminée pour cet inducteur.

Il peut alors y avoir plusieurs paramètres déterminés pour l'ensemble, à savoir un paramètre par inducteur de l'ensemble.

Par exemple, par simplicité, le paramètre est égal à la valeur de l'inducteur considéré. Si un paramètre est déterminé pour plusieurs inducteurs de l'ensemble, voire pour tous les inducteurs de l'ensemble (alors qu'il y a au moins deux inducteurs), le paramètre est par exemple déterminé par un calcul impliquant la valeur pour chacun des inducteurs de l'ensemble considérés.

Le calcul peut par exemple être une somme arithmétique ou une somme pondérée, par exemple une somme des valeurs obtenues pour chacun des inducteurs de l'ensemble considérés.

Ainsi, de manière générale, il y a au moins un paramètre qui est déterminé, et l'au moins un paramètre est déterminé en fonction d'au moins une valeur, rappelant qu'il y a une valeur par inducteur pris en compte.

L'au moins un paramètre est ensuite comparé au seuil secondaire.

Ainsi, l'étape de comparaison secondaire peut être mise en oeuvre pour chacun des inducteurs de l'ensemble, soit pour plusieurs des inducteurs de l'ensemble, soit pour tous les inducteurs de l'ensemble (qui en comporte au moins deux).

Le seuil secondaire est de préférence un seuil fixe et prédéterminé.

Il y a de préférence un seul seuil secondaire.

Ce seuil est alors de préférence unique et indépendant du nombre d'inducteurs de l'ensemble.

Toutefois, le seuil peut être de niveau différent selon si le paramètre est déterminé pour un seul inducteur de l'ensemble ou pour plusieurs inducteurs.

Le résultat de l'étape de comparaison secondaire est positif lorsque le paramètre déterminé traduit qu'au moins un inducteur de l'ensemble est recouvert au moins en partie par un élément ferromagnétique à chauffer, et alors les inducteurs de l'ensemble sont activés.

Sinon, le résultat de l'étape de comparaison secondaire est négatif, ce qui traduit que l'ensemble des inducteurs n'est pas recouvert par un élément ferromagnétique représentatif d'un ustensile de cuisine à chauffer, et alors les inducteurs de l'ensemble ne sont pas activés.

En fonction du cas choisi pour déterminer le paramètre (en fonction d'une ou plusieurs valeurs, chaque valeur étant elle-même déterminée à partir d'une grandeur physique, ou d'une combinaison de grandeurs physiques), le résultat est positif lorsque le paramètre est supérieur ou inférieur au seuil secondaire.

Ainsi, par exemple, pour une valeur établie proportionnelle au taux de recouvrement, le résultat de l'étape de comparaison secondaire est positif lorsque le paramètre obtenu à partir d'au moins une valeur est égal ou supérieur au seuil.

Ou en d'autres termes, le résultat de l'étape de comparaison secondaire est positif si le paramètre pour au moins un inducteur de l'ensemble est égal ou supérieur au seuil secondaire, et alors les inducteurs de l'ensemble sont activés, et peuvent être chauffés.

Selon cet exemple, le résultat de l'étape de comparaison secondaire est négatif si le paramètre pour chaque inducteur de l'ensemble est inférieur au seuil secondaire, et alors les inducteurs de l'ensemble ne sont pas activés, et a fortiori ne peuvent pas être mis en chauffe.

Inversement, pour une valeur établie inversement proportionnelle au taux de recouvrement, le résultat de l'étape de comparaison secondaire est positif lorsque le paramètre obtenu à partir d'au moins une valeur est inférieur ou égal au seuil.

Ou en d'autres termes, le résultat de l'étape de comparaison secondaire est positif si le paramètre pour au moins un inducteur de l'ensemble est inférieur ou égal au seuil secondaire, et alors les inducteurs de l'ensemble sont activés, et peuvent être chauffés.

Selon cet exemple, le résultat de l'étape de comparaison secondaire est négatif si le paramètre pour chaque inducteur de l'ensemble est supérieur au seuil secondaire, et alors les inducteurs de l'ensemble ne sont pas activés, et a fortiori ne peuvent pas être mis en chauffe.

Dans un exemple de mise en oeuvre intéressant, l'au moins une grandeur est mesurée et la valeur déterminée lors de l'étape d'identification de l'ensemble d'inducteurs adjacents recouverts au moins en partie.

Par exemple, l'étape d'identification de l'ensemble comporte une étape de détection d'un élément ferromagnétique sur un inducteur, pour chaque inducteur de la table de cuisson.

Par exemple, si un élément ferromagnétique est détecté sur au moins deux inducteurs, l'étape d'identification de l'ensemble comporte en outre une étape de vérification si les au moins deux inducteurs sont adjacents.

L'ensemble comporte alors tous les inducteurs de la table de cuisson qui sont recouverts au moins en partie et qui sont adjacents.

Sinon, il n'y a alors qu'un seul inducteur de la table de cuisson qui est recouvert, au moins en partie, par un élément ferromagnétique, et l'ensemble ne comporte alors que cet inducteur.

En pratique, il peut donc y avoir plusieurs ensembles définis sur la table de cuisson. Par exemple, l'étape de vérification comporte une étape de localisation de chaque inducteur sur lequel un élément ferromagnétique est détecté par rapport à une cartographie des inducteurs de la table de cuisson.

La cartographie est par exemple enregistrée dans la table de cuisson.

Par exemple, la cartographie permet d'identifier chacun des inducteurs et sa position dans la table de cuisson.

Ceci permet d'identifier la position de chaque inducteur recouvert au moins en partie et si au moins deux inducteurs sont recouverts, s'ils sont adjacents ou non.

Ou pour chaque inducteur recouvert au moins en partie, le procédé vérifie donc si au moins un inducteur adjacent est recouvert.

Par exemple, l'étape de détection comporte, pour chaque inducteur de la table de cuisson :
- une étape de mesure de l'au moins une grandeur physique pour un inducteur ;
- une étape de détermination de la valeur à partir de l'au moins une grandeur physique mesurée, pour l'inducteur ; et
- une étape de comparaison de la valeur avec un seuil prédéfini, appelé seuil de présence.

L'inducteur considéré est alors identifié comme recouvert au moins en partie par un élément ferromagnétique si un résultat de comparaison de l'étape de détection est positif.

Par exemple, en fonction de l'au moins une grandeur physique à partir de laquelle la valeur est déterminée pour l'inducteur, le résultat de comparaison de l'étape de détection est positif si la valeur est supérieure (ou inférieure) au seuil de présence pour l'inducteur considéré.

Pour chaque inducteur de la table de cuisson, l'étape de détection est alors par exemple configurée pour utiliser un seuil de présence permettant d'identifier si un élément ferromagnétique est absent ou présent, quelle que soit sa dimension.

Le procédé permet ainsi d'identifier les inducteurs de la table de cuisson dont au moins une partie est recouverte par un élément ferromagnétique, quelle que soit la surface de recouvrement.

Selon une option envisageable, le procédé comporte par exemple une étape de définition d'un premier groupe comportant l'au moins un inducteur identifié comme étant recouvert au moins en partie, voire optionnellement une étape de définition d'un deuxième groupe comportant l'au moins un inducteur non recouvert.

Ainsi, par exemple, tous les inducteurs de la table de cuisson appartiennent à l'un ou l'autre du premier ou du deuxième groupe.

Le procédé décide ensuite si l'élément ferromagnétique peut être chauffé ou non, par exemple via une unité de contrôle, éventuellement en fonction de l'au moins un paramètre déterminé pour les différents inducteurs.

Par exemple, le procédé comporte au moins les étapes suivantes :
- Utiliser pour chaque inducteur alimenté par une carte électronique de puissance un seuil détectant l'absence, ou la présence, d'élément ferromagnétique, quelle que soit sa dimension ;
- Transmettre une mesure d'une grandeur physique de l'élément ferromagnétique à détecter, et possiblement à chauffer, à l'unité de contrôle ayant la cartographie des inducteurs ;
- Décider de la détection et du chauffage ou non via l'unité de contrôle en fonction des mesures des différents inducteurs adjacents et éventuellement de leur nombre.

Ainsi, utiliser une cartographie, incidemment des mesures d'au moins une grandeur physique, pour chaque inducteur permet d'estimer la taille d'un élément ferromagnétique sur une table à induction et ainsi discriminer des petits éléments ferromagnétiques.

Dans un exemple de mise en oeuvre intéressant, le procédé comporte en outre :
- une étape de détermination d'un nombre d'inducteurs de l'ensemble ; et
- une étape de comparaison du nombre d'inducteurs de l'ensemble par rapport à un nombre prédéfini ;
et si le nombre d'inducteurs de l'ensemble est inférieur au nombre prédéfini, alors le procédé met en oeuvre l'étape de comparaison secondaire.

Par exemple, si le nombre d'inducteurs de l'ensemble est au moins égal au nombre prédéfini, l'étape d'activation de chaque inducteur de l'ensemble est mise en oeuvre, et tous les inducteurs de l'ensemble sont activés, et peuvent être chauffés.

Il n'est alors pas nécessaire de comparer l'au moins un paramètre à un seuil secondaire.

Le nombre prédéfini dépend par exemple de la taille des inducteurs ou de tout autre facteur, comme leur forme, et/ou encore leurs positions relatives.

En effet, à partir de ce nombre prédéfini d'inducteurs recouverts, la surface recouverte apparait trop grande pour pouvoir être due à un ustensile. Le procédé peut alors en déduire qu'il s'agit nécessairement d'un récipient à chauffer.

Par exemple, le nombre prédéfini est égale à trois, ou quatre ; ainsi, si au total trois ou quatre inducteurs adjacents, ou plus, sont recouverts au moins en partie, alors l'élément ferromagnétique détecté est un récipient, à chauffer.

De préférence, le seuil secondaire est différent du seuil de présence qui est configuré pour simplement détecter la présence ou l'absence d'un élément ferromagnétique sur un inducteur.

Toutefois, plus le nombre d'inducteurs dans l'ensemble est grand, plus ces deux seuils peuvent être proches. Ils peuvent même être égaux avec un nombre suffisant d'inducteurs, par exemple au-delà de trois ou quatre inducteurs.

Par exemple, le seuil secondaire est inférieur ou supérieur au seuil de présence selon l'au moins une grandeur physique mesurée.

Par exemple, le résultat de l'étape de comparaison secondaire est négatif si le paramètre pour chaque inducteur de l'ensemble est compris entre le seuil secondaire et le seuil de présence, et alors les inducteurs de l'ensemble ne sont pas activés, et ne peuvent donc pas être mis en chauffe.

Dans un exemple de mise en oeuvre intéressant, le seuil secondaire dépend du nombre d'inducteurs de l'ensemble.

Par exemple, un premier seuil secondaire relatif à un ensemble ayant un premier nombre d'inducteurs et un deuxième seuil secondaire relatif à un ensemble différent, ayant un deuxième nombre d'inducteurs, différent du premier nombre, sont différents. Par exemple, plus il y a d'inducteurs recouverts, plus le seuil secondaire peut être proche du seuil de présence.

Par exemple, des seuils secondaires sont établis de la manière suivante.
- Si l'ensemble ne comporte qu'un seul inducteur recouvert au moins en partie, i.e. il ne comporte aucun inducteur adjacent recouvert au moins en partie c'est-à-dire que le nombre d'inducteur de l'ensemble est égal à un, si le paramètre est inférieur (ou resp. supérieur) ou égal à un premier seuil secondaire, alors c'est un récipient à chauffer (i.e. ce n'est pas une fourchette). Sinon, c'est un ustensile à ne pas chauffer.
- Si l'ensemble comporte au moins deux inducteurs adjacents recouverts au moins en partie, i.e. le nombre d'inducteurs de l'ensemble est égal à au moins deux, si au moins l'un des paramètres est inférieur (ou resp. supérieur) ou égal à un deuxième seuil secondaire, alors c'est un récipient à chauffer (ce n'est pas un ustensile). Si le paramètre de chacun des au moins deux inducteurs est supérieur (ou resp. inférieur) au deuxième seuil secondaire, par exemple compris entre le deuxième seuil secondaire et le seuil de présence, alors c'est un ustensile à ne pas chauffer.

Par exemple, il peut y avoir autant de seuils secondaires que d'inducteurs en dessous du nombre prédéfini.

L'invention concerne aussi une table de cuisson à induction comportant au moins deux inducteurs et une unité de contrôle configurée pour mettre en oeuvre le procédé tel que décrit ci-dessus.

Dans un exemple de réalisation, la table de cuisson comporte en outre une carte électronique de puissance alimentant les inducteurs, et l'unité de contrôle est configurée pour commander la carte électronique de puissance.

L'unité de contrôle peut être inclue dans la carte électronique de puissance ou être une unité de contrôle externe, notamment, par exemple, dans le cas d'une table matricielle comportant plusieurs cartes de puissance.

La valeur de l'au moins une grandeur physique qui a été mesurée est par exemple transmise à l'unité de contrôle, de même que l'au moins un paramètre.

Par exemple, le seuil de présence et/ou le seuil secondaire est enregistré dans l'unité de contrôle.

L'unité de contrôle comporte aussi par exemple une cartographie des inducteurs et, pour chaque inducteur, il comporte par exemple une référence de l'au moins une grandeur physique, représentative de la présence ou l'absence d'élément ferromagnétique sur l'inducteur.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
- la figure 1 représente schématiquement une surface de cuisson d'une table de cuisson à agencement matriciel d'inducteurs sur laquelle une fourchette-norme est disposée sur un seul inducteur ;
- la figure 2 représente schématiquement la table de cuisson de la figure 1 sur laquelle un récipient à chauffer est disposé sur plusieurs inducteurs ;
- la figure 3 représente schématiquement la table de cuisson de la figure 1 sur laquelle une fourchette-norme est disposée sur deux inducteurs ;
- la figure 4 illustre une étape de détermination de valeurs d'au moins une grandeur physique lorsqu'une fourchette 4 est disposée sur un inducteur ;
- la figure 5 illustre une étape de détermination de valeurs d'au moins une grandeur physique lorsqu'une fourchette 4 est disposée sur deux inducteurs ;
- la figure 6 illustre une étape de détermination de valeurs d'au moins une grandeur physique lorsqu'un récipient 3 de 90 mm de diamètre est disposé sur deux inducteurs ;
- la figure 7 illustre une étape de détermination de valeurs d'au moins une grandeur physique lorsqu'un récipient 3 de 100 mm de diamètre est disposée sur trois inducteurs ; et
- la figure 8 représente un diagramme illustrant un procédé selon un exemple de mise en oeuvre de l'invention.

Les éléments identiques représentés sur les figures précitées sont identifiés par des références numériques identiques.

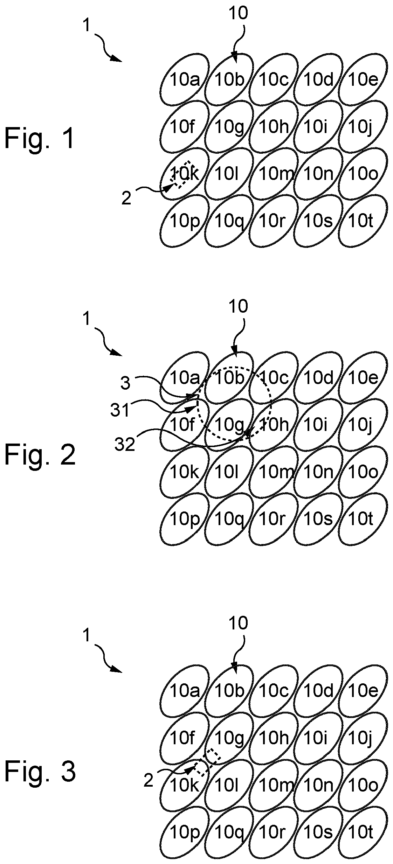

Les figures 1 à 3 représentent un exemple schématique d'une surface de cuisson 1 de table de cuisson à induction comportant des inducteurs 10 selon un agencement matriciel.

Ici, pour l'exemple, la table de cuisson comporte vingt inducteurs 10 agencés selon quatre rangées de cinq inducteurs chacune, et numérotés 10a à 10t.

Dans le présent exemple de réalisation, tous les inducteurs 10 ont une même forme, et ont ici une forme ovale.

Bien entendu, la présente description peut s'appliquer à d'autres formes d'inducteurs, notamment circulaires (rondes).

En outre, les inducteurs peuvent être disposés en simples lignes et colonnes, ou en quinconce.

Une surface de cuisson peut également comporter des inducteurs ayant différentes formes, par exemple des inducteurs de formes rondes et ovales, ou ayant différentes tailles.

Une telle table de cuisson à agencement matriciel est ainsi généralement configurée pour détecter un récipient, par exemple une casserole, quel que soit son emplacement sur la table de cuisson.

Il est alors possible qu'un récipient ne recouvre qu'une partie d'un inducteur 10.

Or, dans une table de cuisson de l'art antérieur, seuls les inducteurs recouverts suffisamment, c'est-à-dire selon un taux de recouvrement supérieur à un seuil préétabli, sont alors activés pour chauffer.

Cependant, il est préférable de distinguer un cas où un inducteur est recouvert par une partie d'un récipient, qui est à chauffer, par rapport à un cas où un inducteur est recouvert par un petit élément ferromagnétique, comme un ustensile de cuisine, qu'il est préférable d'éviter de chauffer, voire qui n'a pas besoin d'être détecté.

Un tel petit élément ferromagnétique est, selon des normes, modélisé par un rectangle d'acier de dimensions prédéfinies, et connu sous le nom de « *fourchette norme ».*

La norme IEC 60335-2-6 impose par exemple qu'une « *fourchette norme* », soit discriminée, c'est-à-dire ne soit pas détectée ou ne déclenche pas l'activation d'un inducteur au-dessus duquel elle se trouve.

La figure 1 illustre un cas où une fourchette-norme 2 est disposée centrée sur un seul inducteur 10, ici l'inducteur 10k.

La figure 2 illustre un cas où un récipient 3, par exemple une casserole de 180 mm de diamètre de fond recouvre plusieurs inducteurs 10, ici les inducteurs 10b, 10c, 10f, 10g et 10h. Or, dans la configuration illustrée sur cette figure, le récipient 3 recouvre l'inducteur 10f selon une zone de recouvrement 31, et l'inducteur 10h selon une zone de recouvrement 32, et ces zones de recouvrement 31, 32 ont chacune une surface au maximum équivalente à celle de la fourchette-norme 2.

Dans des conditions d'essais (aucune casserole posée sur la table, comme sur la figure 1), la fourchette-norme 2 ne doit pas être détectée, alors que dans une configuration comme sur la figure 2, il serait intéressant que les zones de recouvrement 31, 32 des inducteurs 10f et 10h soient détectées et chauffées. Considérons qu'un seuil de détection unique est préétabli pour chaque inducteur 10 et que ce seuil soit configuré pour empêcher la fourchette-norme 2 de chauffer.

Une surface de la fourchette-norme 2 étant égale, voire supérieure, à celle de chacune des zones de recouvrement 31, 32, les zones de recouvrement 31, 32 ne seront ni détectées ni chauffées. Le récipient 3 ne chauffera donc pas de façon homogène et il y aura une perte de puissance disponible (puisqu'une partie du récipient ne sera pas chauffée).

Considérons maintenant qu'un seuil Vsp est utilisé pour chaque inducteur, et que ce seuil est configuré pour détecter si un élément ferromagnétique recouvre au moins une partie d'un des inducteurs, c'est-à-dire que ce seuil permet de détecter une absence ou une présence d'un élément ferromagnétique sur un inducteur considéré et s'il doit ou non être chauffé.

Tous les éléments (fourchette-norme 2 sur la figure 1 et zones de recouvrement 31 et 32 sur la figure 2) sont détectés grâce à ce seuil Vsp.

Les inducteurs non recouverts (i.e. vides) peuvent aussi être identifiés, mais ne seront pas autorisés à chauffer.

La table de cuisson est ainsi configurée pour mettre en oeuvre un procédé comportant une étape de détection S11 configurée pour identifier si un élément ferromagnétique recouvre au moins une partie d'un inducteur.

Puis le procédé retourne une liste d'inducteurs recouverts (10k pour le premier cas, 10b, 10c, 10f, 10g, 10h pour le second cas) et optionnellement une liste d'inducteurs non recouverts.

Autrement dit, le procédé comporte possiblement une étape de définition d'un premier ensemble comportant les inducteurs recouverts au moins en partie, et d'un deuxième ensemble comportant les inducteurs non recouverts.

Pour cela, le procédé comporte par exemple une étape de mesure d'au moins une grandeur physique, et une étape de détermination d'une valeur Vmi de l'au moins une grandeur physique mesurée pour chacun des inducteurs 10 de la surface de cuisson 1. L'au moins une grandeur physique mesurée est par exemple choisie parmi une tension, un courant, une puissance, et/ou encore un paramètre de commutation d'un circuit oscillant.

Ainsi, par exemple, pour chaque inducteur de la table de cuisson, une ou plusieurs grandeurs physiques sont mesurées et, éventuellement, plusieurs mesures sont combinées.

Pour chaque inducteur de la table de cuisson, cette mesure ou combinaison de mesures permet alors de déterminer la valeur Vmi pour l'inducteur.

De préférence, cette valeur est représentative d'un taux de recouvrement d'un inducteur par un élément ferromagnétique.

Le procédé comporte par exemple ensuite une étape de transmission des valeurs Vmi de l'au moins une grandeur physique mesurée pour chacun des inducteurs 10 à une unité de contrôle de la table de cuisson.

L'unité de contrôle de la table de cuisson comporte par exemple une cartographie des inducteurs dans la table de cuisson, c'est-à-dire qu'au moins une position de chacun des inducteurs est connue et enregistrée dans la table de cuisson. Une taille, voire une forme, de chacun des inducteurs peuvent également être connues et enregistrées dans l'unité de contrôle.

Dans le présent exemple, pour chacun des inducteurs, la valeur de l'au moins une grandeur physique mesurée correspond à la mesure de la grandeur physique choisie. Le procédé comporte ensuite une étape de comparaison de la valeur Vmi avec un seuil de présence Vsp, pour chacun des inducteurs de la table de cuisson.

Dans le cas de la figure 1, la valeur Vmi transmise à l'unité de contrôle pour l'inducteur 10k, recouvert par la fourchette-norme 2, permet à l'unité de contrôle de savoir que l'inducteur est recouvert, même s'il est peu recouvert.

Après une analyse des inducteurs adjacents, qui sont vides dans ce cas, c'est-à-dire non recouverts, il est possible d'estimer que l'élément est trop petit pour être chauffé. Dans le cas de la figure 2, les valeurs transmises à l'unité de contrôle pour les inducteurs 10f et 10h, recouverts seulement par une petite partie du récipient 3 en leur zone de recouvrement 31, 32, permettent à l'unité de contrôle de savoir que ces inducteurs sont recouverts, même s'ils sont peu recouverts.

Après une analyse des inducteurs adjacents, soit des valeurs transmises à l'unité de contrôle pour les inducteurs 10g, 10b et 10c, qui sont davantage recouverts, il est possible d'estimer que les inducteurs 10f et 10h sont recouverts par des bords de récipient 3. Ils peuvent donc être activés, et chauffés.

La figure 3 illustre un cas où la fourchette-norme 2 est disposée à cheval sur deux inducteurs 10 adjacents, ici les inducteurs 10g et 10k.

L'étape de détection S11, configurée pour identifier si un élément ferromagnétique recouvre au moins une partie d'un inducteur, retourne alors une liste d'inducteurs recouverts, qui comporte les inducteurs 10g et 10k, et possiblement une liste d'inducteurs non recouverts, qui comporte tous les autres inducteurs, soit 10a à 10f, 10h à 10j et 10l à 10t.

Dans la configuration de la figure 3, les valeurs transmises à l'unité de contrôle pour les inducteurs 10g et 10k, recouverts seulement en partie par la fourchette-norme 2, permettent à l'unité de contrôle de savoir que ces deux inducteurs sont recouverts, même s'ils sont très peu recouverts.

Après une analyse des inducteurs adjacents à ces deux inducteurs 10g et 10k, qui sont vides, non recouverts, il est possible d'estimer que l'élément est trop petit pour être chauffé, et les inducteurs 10g et 10k ne sont pas activés.

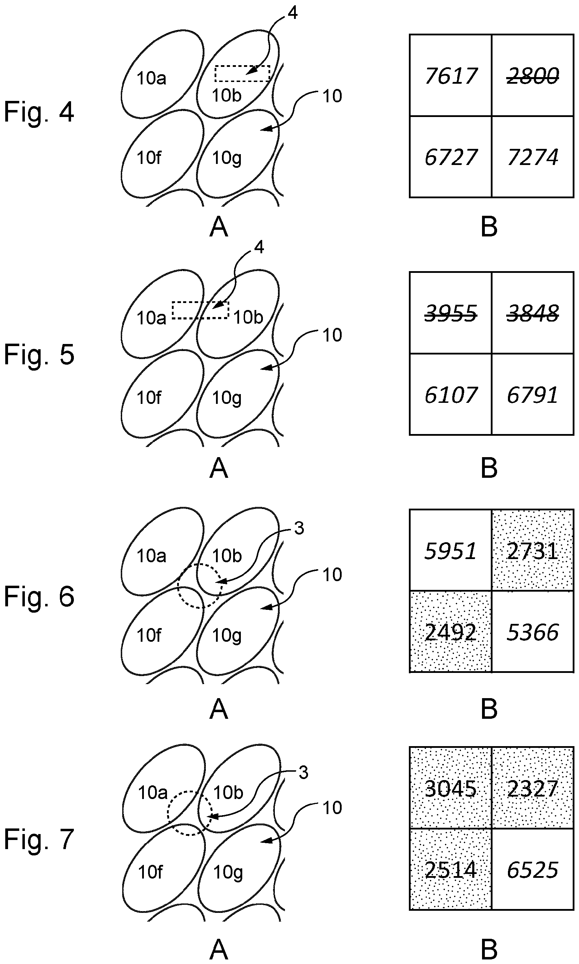

Les figures 4 à 7 illustrent l'étape de détermination de valeurs Vmi d'au moins une grandeur physique mesurée pour :
- Une fourchette 4 sur un inducteur (figure 4),
- Une fourchette 4 à cheval sur deux inducteurs (figure 5),
- Un récipient 3 de 90 mm de diamètre recouvrant en partie deux inducteurs (figure 6),
- Un récipient 3 de 100 mm de diamètre recouvrant en partie trois inducteurs (figure 7).

Pour chacune de ces figures, la figure A représente schématiquement quatre inducteurs 10a, 10b, 10f, 10g de la surface de cuisson 1 des figures 1 à 3, i.e. disposés en matrice 2x2 ; et la figure B indiquent la valeur Vmi correspondante pour chacun des inducteurs.

Il s'agit ici de chiffres arbitraires pour l'illustration et n'ont donc pas d'unité.

Ainsi, l'inducteur 10a est considéré disposé en haut à gauche, l'inducteur 10b est considéré disposé en haut à droite, l'inducteur 10f est considéré disposé en bas à gauche, et l'inducteur 10g est considéré disposé en bas à droite.

Chacun des inducteurs est alors adjacent aux trois autres, soit ici un voisin immédiat ainsi qu'un inducteur en diagonal.

La mesure de l'au moins une grandeur physique ne fait pas l'objet de la présente invention et n'est donc pas décrite ici.

La valeur Vmi pour un inducteur peut ainsi correspondre à la mesure d'une grandeur physique choisie, ou à une combinaison de mesures de différentes grandeurs physiques.

Pour les exemples illustrés ici, un seuil de présence Vsp est établi à 4500 (sans unité, car il peut s'agir de n'importe quelle grandeur physique choisie ou d'une combinaison). En utilisant le principe décrit précédemment, si la valeur Vmi est, ici, inférieure à Vsp=4500, l'inducteur est considéré comme étant occupé par un élément ferromagnétique, c'est-à-dire recouvert au moins en partie. Sinon, il est libre (non recouvert).

Par exemple en se référant à la figure 4, les valeurs Vmi pour les inducteurs sont les suivantes :
- Inducteur 10a : 7617, ce qui est supérieur à 4500, donc l'inducteur n'est pas recouvert (il est vide) ;
- Inducteur 10b : 2800, ce qui est inférieur à 4500, donc l'inducteur est recouvert au moins en partie ;
- Inducteur 10f : 6727, ce qui est supérieur à 4500, donc l'inducteur n'est pas recouvert (il est vide) ;
- Inducteur 10g : 7274, ce qui est supérieur à 4500, donc l'inducteur n'est pas recouvert (il est vide).

Pour chaque inducteur recouvert, le procédé vérifie ensuite si au moins un inducteur adjacent est recouvert.

Le procédé met ainsi en oeuvre une étape d'identification S10 d'un ensemble d'inducteurs adjacents recouverts au moins en partie par un élément ferromagnétique.

Ici, l'ensemble ne comporte qu'un inducteur, l'inducteur 10b.

Le procédé comporte ensuite une étape de détermination d'un paramètre Pv.

Le paramètre Pv est déterminé en fonction d'au moins une valeur Vmi d'un inducteur de l'ensemble.

Ainsi, un paramètre peut alors être déterminé pour chaque inducteur de l'ensemble, soit pour plusieurs des inducteurs de l'ensemble, soit pour tous les inducteurs de l'ensemble (c'est-à-dire un paramètre pour l'ensemble, alors que l'ensemble comporte alors au moins deux inducteurs).

Dans le présent exemple, un paramètre Pv est déterminé pour chacun des inducteurs de l'ensemble.

En outre, par simplicité, le paramètre Pv est ici égal à la valeur Vmi.

Le paramètre Pv est ensuite comparé à un seuil secondaire Vss.

Dans le présent exemple, le paramètre Pv pour l'inducteur 10b seulement est alors comparé au seuil secondaire Vss.

Par exemple, le seuil secondaire Vss est égale à 2300
Par exemple, si le paramètre Pv est inférieur ou égal au seuil secondaire Vss (Vss=2300), ce n'est pas une fourchette, i.e. c'est un récipient à chauffer et une étape d'activation S50 de l'inducteur de l'ensemble peut être mise en oeuvre. Sinon, c'est une fourchette et l'étape d'activation S50 n'est pas mise en oeuvre pour cet ensemble.

Ici, le paramètre Pv valant Vmi = 2800, ce qui est supérieur au seuil secondaire Vss, alors le procédé n'active pas l'inducteur 10b.

Selon une option intéressant, il est possible de dénombrer les inducteurs présents dans un ensemble, par exemple lors d'une étape de détermination S20 d'un nombre Nbi d'inducteurs de l'ensemble.

En outre, il est possible de définir un nombre prédéfini Nbs, limite, d'inducteurs dans un ensemble, par exemple ici fixé à trois (Nbs = 3).

Les critères sont alors par exemple utilisés de la manière suivante.
- Si un seul inducteur est occupé (Vmi<Vsp (=4500) pour un inducteur sans inducteur adjacent recouvert au moins en partie, soit un ensemble ne comportant qu'un inducteur), si le paramètre Pv (la valeur mesurée Vmi) est inférieur ou égal à un seuil secondaire Vss (par exemple Vss=2300), ce n'est pas une fourchette, i.e. c'est un récipient à chauffer et une étape d'activation S50 de l'inducteur de l'ensemble peut être mise en oeuvre. Sinon, c'est une fourchette et l'étape d'activation S50 n'est pas mise en oeuvre pour cet ensemble.
- Si deux inducteurs adjacents sont occupés (Vmi<Vsp (=4500) pour deux inducteurs d'un ensemble comportant deux inducteurs), si au moins l'un des paramètre Pv est inférieur ou égal au seuil secondaire Vss (alors égal par exemple à 2800 également), alors ce n'est pas une fourchette, donc c'est un récipient à chauffer et l'étape d'activation S50 des inducteurs de l'ensemble peut être mise en oeuvre. Si le paramètre Pv de chacun des au moins deux inducteurs est supérieur au seuil secondaire Vss, soit alors compris entre le seuil secondaire Vss (2800) et le seuil de présence Vsp (4500), alors c'est une fourchette, et l'étape d'activation S50 n'est pas mise en oeuvre.
- Si trois inducteurs adjacents (ou plus) sont occupés (Vmi<Vsp (=4500) pour trois inducteurs d'un ensemble comportant trois inducteurs), comme le nombre Nbi d'inducteurs est alors au moins égal au nombre prédéfini Nbs, alors ce n'est pas une fourchette et l'étape d'activation S50 de chaque inducteur de l'ensemble de trois inducteurs peut être mise en oeuvre, sans besoin de comparer les paramètres Pv de chaque inducteur à un seuil secondaire Vss. En effet, dans ce cas, la surface recouverte apparait trop grande pour pouvoir être due à une fourchette.

Dans le cas de la figure 4, le procédé identifie que seul l'inducteur 10b est recouvert ; et sa valeur Vmi étant de 2800, le procédé identifie donc qu'il ne s'agit que d'une fourchette, qui ne doit pas être chauffée.

Pour la figure 5, les valeurs Vmi pour les inducteurs sont par exemple les suivantes :
- Inducteur 10a : 3955, ce qui est inférieur à 4500, donc l'inducteur est recouvert au moins en partie ;
- Inducteur 10b : 3848, ce qui est inférieur à 4500, donc l'inducteur est recouvert au moins en partie ;
- Inducteur 10f : 6107, ce qui est supérieur à 4500, donc l'inducteur est vide ;
- Inducteur 10g : 6791, ce qui est supérieur à 4500, donc l'inducteur est vide.

Pour chacun des inducteurs recouverts au moins en partie, le procédé vérifie si au moins un inducteur adjacent est recouvert ; grâce à la cartographie des inducteurs, il en conclut que les deux inducteurs adjacents 10a et 10b sont recouverts par un élément.

L'ensemble comporte donc les deux inducteurs 10a et 10b.

Le procédé détermine ensuite l'au moins un paramètre Pv.

Selon un premier mode de mise en oeuvre, un paramètre Pv est déterminé pour chacun des inducteurs de l'ensemble, et correspond par simplicité à la valeur Vmi correspondante.

Il y a donc ici deux paramètres Pv : l'un pour l'inducteur 10a valant 3955 et l'autre pour l'inducteur 10b valant 3848.

Le paramètre Pv, ici de chacun des inducteurs recouverts 10a et 10b, est ensuite comparé au seuil secondaire Vss, ici 2800 également par exemple.

Comme les deux paramètres Pv sont supérieurs à ce seuil, alors le procédé en conclut qu'il s'agit d'une fourchette.

Selon un deuxième mode de mise en oeuvre, un paramètre Pv est déterminé pour l'ensemble.

Le paramètre Pv correspond alors par exemple à une somme des écarts de la valeur Vmi de chacun des inducteurs de l'ensemble par rapport à un seuil, par exemple par rapport au seuil de présence Vsp.

A considérer le seuil de présence égal à 4500, le paramètre Pv pour ce mode de réalisation est alors : Pv = |3955-4500|+|3848-4500| = 545+652 = 1197.

L'étape d'activation S50 de tous les inducteurs de l'ensemble est alors mise en oeuvre si le paramètre Pv, déterminé pour tous les inducteurs de l'ensemble, est supérieur au seuil secondaire Vss.

Le paramètre Pv, ici unique pour l'ensemble, est comparé au seuil secondaire Vss, qui vaut par exemple ici 2000.

Comme le paramètre Pv est alors inférieur à ce seuil, alors le procédé en conclut qu'il s'agit d'une fourchette, et les inducteurs ne sont donc pas activés.

Pour la figure 6, les valeurs Vmi pour les inducteurs sont par exemple les suivantes :
- Inducteur 10a : 5951, ce qui est supérieur à 4500, donc l'inducteur est vide ;
- Inducteur 10b : 2731, ce qui est inférieur à 4500, donc l'inducteur est recouvert au moins en partie ;
- Inducteur 10f : 2492, ce qui est inférieur à 4500, donc l'inducteur est recouvert au moins en partie ;
- Inducteur 10g : 5366, ce qui est supérieur à 4500, donc l'inducteur est vide.

Pour chacun des inducteurs recouverts au moins en partie (ici les inducteurs 10b et 10f), le procédé vérifie si au moins un inducteur adjacent est recouvert ; grâce à la cartographie des inducteurs, il en conclut que les deux inducteurs adjacents 10b et 10f sont recouverts.

Le procédé détermine ensuite le paramètre Pv.

Selon un premier mode de mise en oeuvre, un paramètre Pv est déterminé pour chacun des inducteurs recouverts 10b et 10f, et est comparé à un seuil secondaire, ici 2800, et comme au moins un des deux paramètres Pv, et même ici les deux paramètres Pv sont inférieurs à ce seuil, alors le procédé en conclut qu'il s'agit d'un récipient, qui peut donc être chauffé.

Selon un deuxième mode de mise en oeuvre où un seul paramètre Pv est déterminé pour l'ensemble, comme décrit en lien avec la figure 5 par exemple, alors Pv vaut alors : Pv = |2731-4500|+|2492-4500| = 1769+2008 = 3777.

Comme indiqué précédemment, l'étape d'activation S50 de tous les inducteurs de l'ensemble est alors mise en oeuvre si le paramètre Pv, déterminé pour tous les inducteurs de l'ensemble, est supérieur au seuil secondaire Vss.

Le paramètre Pv, ici unique pour l'ensemble, est comparé au seuil secondaire Vss, qui vaut par exemple ici 2000.

Comme le paramètre Pv est alors supérieur à ce seuil, alors le procédé en conclut qu'il s'agit bien d'un récipient, et les inducteurs sont donc activés et pourront être chauffés. Pour la figure 7, les valeurs Vmi pour les inducteurs sont par exemple les suivantes :
- Inducteur 10a : 3045, ce qui est inférieur à 4500, donc l'inducteur est recouvert au moins en partie ;
- Inducteur 10b : 2327, ce qui est inférieur à 4500, donc l'inducteur est recouvert au moins en partie ;
- Inducteur 10f : 2514, ce qui est inférieur à 4500, donc l'inducteur est recouvert au moins en partie ;
- Inducteur 10g : 6525, ce qui est supérieur à 4500, donc l'inducteur est vide.

Pour chacun des inducteurs recouverts au moins en partie (ici les inducteurs 10a, 10b et 10f), le procédé vérifie si au moins un inducteur adjacent est recouvert ; grâce à la cartographie des inducteurs, il en conclut que les trois inducteurs adjacents 10a, 10b et 10f sont recouverts.

Comme trois inducteurs sont adjacents et occupés, alors ce n'est pas la fourchette, et l'élément qui les recouvre, au moins en partie, peut être chauffé. Les inducteurs de l'ensemble sont donc alors activés.

Toutefois, sans cette étape de détermination et comparaison du nombre d'inducteurs de l'ensemble, au moins un paramètre Pv peut être déterminé.

Si par exemple un paramètre Pv est déterminé pour chaque inducteur de l'ensemble, comme précédemment, comme Pv est alors inférieur au seuil secondaire (ici de 2800) pour au moins les inducteurs 10b et 10f, alors les inducteurs de l'ensemble sont donc bien activés.

Si un paramètre Pv est déterminé pour tout l'ensemble, comme précédemment, alors Pv est égal à Pv = |3045-4500|+|2327-4500|+|2514-4500| = 1455+2173+1986 = 5703, ce qui est bien supérieur au seuil secondaire de 2000 correspondant, et les inducteurs de l'ensemble seraient donc bien activés également.

Dans les exemples ci-dessus, si le procédé selon l'invention n'est pas appliqué, tous les inducteurs dont la valeur est supérieure à 2300 sont alors considérés comme étant non occupés ; les récipients 3 de 90 mm ou 100 mm selon les exemples des figures 6 et 7 ne seraient alors pas chauffés.

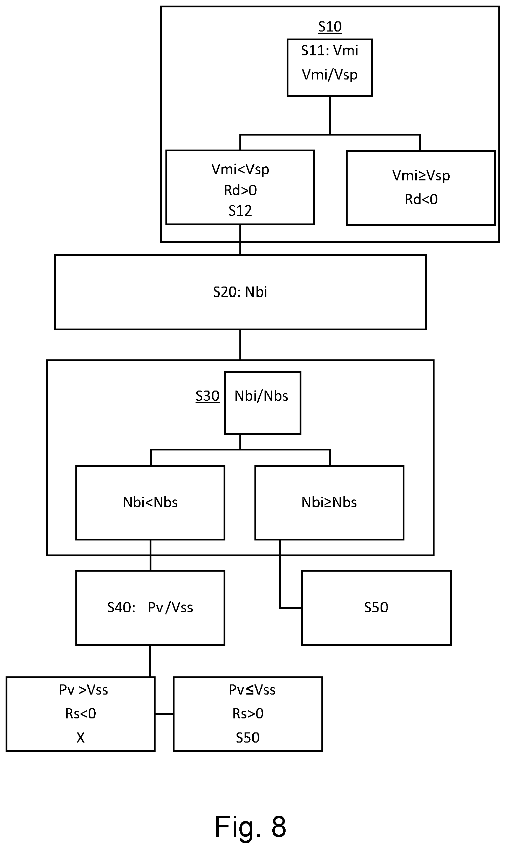

Ainsi, le procédé selon un exemple de réalisation de l'invention est schématisé figure 8.

Le procédé comporte par exemple pour commencer une étape d'identification S10 d'un ensemble d'inducteurs 10 adjacents recouverts au moins en partie par un élément ferromagnétique.

Pour identifier cet ensemble, le procédé peut comporter une étape de détection S11 dans laquelle la valeur Vmi de l'au moins une grandeur physique mesurée est déterminée pour chaque inducteur 10 de la surface de cuisson 1 et la valeur Vmi est comparée avec un seuil prédéfini, appelé seuil de présence Vsp, pour chaque inducteur.

Si le résultat de comparaison Rd de l'étape de détection S11 est négatif, un inducteur 10 est identifié comme vide, c'est-à-dire qu'il n'apparait pas recouvert au moins en partie par un élément ferromagnétique.

Si le résultat de comparaison Rd de l'étape de détection S11 est positif, un inducteur 10 est identifié comme recouvert au moins en partie par un élément ferromagnétique.

Par exemple, un résultat de comparaison Rd de l'étape de détection S11 est positif si la valeur Vmi pour un inducteur 10 est ici inférieure au seuil de présence Vsp (le résultat de comparaison Rd peut toutefois être positif si la valeur Vmi pour un inducteur est supérieure au seuil de présence Vsp selon l'au moins une grandeur physique mesurée choisie). Ici, si elle est au moins égale au seuil de présence Vsp, alors le résultat de comparaison Rd est considéré comme négatif.

Pour identifier si les inducteurs identifiés comme recouverts au moins en partie sont adjacents, le procédé peut en outre comporter une étape de localisation S12 de chaque inducteur 10 identifié par rapport à une cartographie des inducteurs enregistrée. Cette étape peut toutefois être mise en oeuvre pour tous les inducteurs de la table de cuisson.

Ensuite, le procédé comporte par exemple une étape de détermination S20 d'un nombre Nbi d'inducteurs de l'ensemble ainsi formé par des inducteurs recouverts au moins en partie qui sont adjacents. L'ensemble pouvant ne comporter qu'un inducteur, le nombre Nbi est au moins égal à 1.

Lors d'une étape de comparaison S30, le nombre Nbi d'inducteurs de l'ensemble est comparé à un nombre prédéfini Nbs.

Ce nombre prédéfini Nbs dépend par exemple de la taille des inducteurs ou de tout autre facteur comme leur forme, et/ou encore leurs positions relatives.

Si le nombre Nbi d'inducteurs de l'ensemble est au moins égal au nombre prédéfini Nbs, l'étape d'activation S50 de chaque inducteur de l'ensemble est mise en oeuvre, et tous les inducteurs de l'ensemble sont activés et peuvent être chauffés.

Si le nombre Nbi d'inducteurs de l'ensemble est inférieur au nombre prédéfini Nbs, alors l'élément ferromagnétique recouvrant au moins en partie les inducteurs de l'ensemble est possiblement de petite taille et il est alors préférable de distinguer un petit objet (fourchette-norme) d'un bord de récipient à chauffer.

Le cas échéant, le procédé comporte alors en outre une étape de comparaison secondaire S40 dans laquelle un paramètre Pv déterminé à partir d'au moins la valeur Vmi d'au moins une grandeur physique mesurée pour chaque inducteur de l'ensemble est comparé à un seuil secondaire Vss.

La valeur du seuil secondaire Vss peut par exemple varier en fonction du nombre Nbi d'inducteurs de l'ensemble.

Si un résultat Rs de l'étape de comparaison secondaire est positif, le procédé comporte alors une étape d'activation S50 de chaque inducteur de l'ensemble.

Sinon, si un résultat Rs de l'étape de comparaison secondaire est négatif, alors les inducteurs de l'ensemble ne sont pas activés et ne pourrons pas être chauffés.

En fonction de l'au moins une grandeurs physique choisie et de la façon dont est déterminé le paramètre (par exemple pour un inducteur de l'ensemble ou plusieurs, ou tous), le résultat Rs de l'étape de comparaison secondaire S40 est considéré positif par exemple si le paramètre Pv est égal ou inférieur au seuil secondaire Vss.

Sinon, si le paramètre Pv pour chaque inducteur de l'ensemble est supérieur au seuil secondaire Vss, le résultat Rs de l'étape de comparaison secondaire S40 est ici considéré comme négatif et alors les inducteurs de l'ensemble ne sont pas activés.

## Revendications

1. Procédé de fonctionnement d'une table de cuisson à induction, la table de cuisson comportant au moins deux inducteurs, le procédé comportant :
- une étape d'identification (S10) d'un ensemble d'inducteurs adjacents recouverts au moins en partie par un élément ferromagnétique, l'ensemble comportant au moins un inducteur (10) recouvert au moins en partie, et l'étape d'identification (S10) de l'ensemble comportant :
∘ une étape de détection (S11) d'un élément ferromagnétique sur un inducteur, pour chaque inducteur de la table de cuisson ; et
∘ si un élément ferromagnétique est détecté sur au moins deux inducteurs, une étape de vérification si les au moins deux inducteurs sont adjacents ;
- une étape de comparaison secondaire (S40), par rapport à un seuil secondaire (Vss), d'au moins un paramètre (Pv) déterminé en fonction d'au moins une valeur (Vmi), chaque valeur (Vmi) résultant d'au moins une grandeur physique mesurée pour l'un des inducteurs de l'ensemble ;
et si un résultat (Rs) de l'étape de comparaison secondaire est positif, lorsque le paramètre (Pv) déterminé traduit qu'au moins un inducteur de l'ensemble est recouvert au moins en partie par un élément ferromagnétique à chauffer, le procédé comporte :
- une étape d'activation (S50) de chaque inducteur de l'ensemble.

2. Procédé selon la revendication 1, dans lequel l'étape de vérification comporte une étape de localisation (S12) de chaque inducteur (10) sur lequel un élément ferromagnétique est détecté par rapport à une cartographie des inducteurs de la table de cuisson.

3. Procédé selon l'une quelconque des revendications 1 ou 2, dans lequel l'étape de détection (S11) comporte, pour chaque inducteur de la table de cuisson :
- une étape de mesure de l'au moins une grandeur physique pour un inducteur ;
- une étape de détermination de la valeur (Vmi) à partir de l'au moins une grandeur physique mesurée pour l'inducteur ; et
- une étape de comparaison de la valeur (Vmi) avec un seuil prédéfini, appelé seuil de présence (Vsp) ;
l'inducteur (10) étant identifié comme recouvert au moins en partie par un élément ferromagnétique si un résultat de comparaison (Rd) de l'étape de détection (S11) est positif.

4. Procédé selon l'une quelconque des revendications 1 à 3, dans lequel le paramètre (Pv) est déterminé pour chaque inducteur (10) de l'ensemble.

5. Procédé selon les revendications 3 et 4, dans lequel le résultat (Rs) de l'étape de comparaison secondaire (S40) est négatif si le paramètre (Pv) pour chaque inducteur (10) de l'ensemble est compris entre le seuil secondaire (Vss) et le seuil de présence (Vsp).

6. Procédé selon l'une quelconque des revendications 1 à 3, dans lequel le paramètre (Pv) est déterminé pour l'ensemble.

7. Procédé selon l'une quelconque ces revendications 1 à 6, comportant en outre :
- une étape de détermination (S20) d'un nombre (Nbi) d'inducteurs de l'ensemble ; et
- une étape de comparaison (S30) du nombre (Nbi) d'inducteurs de l'ensemble par rapport à un nombre prédéfini (Nbs) ;
et si le nombre d'inducteurs de l'ensemble est inférieur au nombre prédéfini, alors le procédé met en oeuvre l'étape de comparaison secondaire.

8. Procédé selon la revendication 7, dans lequel si le nombre (Nbi) d'inducteurs de l'ensemble est au moins égal au nombre prédéfini (Nbs), l'étape d'activation (S50) de chaque inducteur de l'ensemble est mise en oeuvre, et tous les inducteurs de l'ensemble sont activés.

9. Procédé selon la revendication 7, dans lequel le seuil secondaire (Vss) dépend du nombre d'inducteurs de l'ensemble (Nbi).

10. Table de cuisson à induction comportant au moins deux inducteurs (10) et une unité de contrôle configurée pour mettre en oeuvre le procédé selon l'une quelconque des revendications 1 à 9.

11. Table de cuisson selon la revendication 10, comportant en outre une carte électronique de puissance alimentant les inducteurs (10), et l'unité de contrôle étant configurée pour commander la carte électronique de puissance.

## Patentansprüche

1. Verfahren zum Betrieb eines Induktionskochfelds, wobei das Kochfeld mindestens zwei Induktoren enthält, wobei das Verfahren enthält:
- einen Schritt der Identifikation (S10) einer Anordnung benachbarter Induktoren, die mindestens teilweise von einem ferromagnetischen Element bedeckt sind, wobei die Anordnung mindestens einen Induktor (10) enthält, der mindestens teilweise bedeckt ist, und wobei der Schritt der Identifikation (S10) der Anordnung enthält:
∘ einen Schritt der Erfassung (S11) eines ferromagnetischen Elements auf einem Induktor, für jeden Induktor des Kochfelds; und
∘ wenn ein ferromagnetisches Element auf mindestens zwei Induktoren erfasst wird, einen Schritt der Überprüfung, ob die mindestens zwei Induktoren benachbart sind;
- einen Schritt des sekundären Vergleichs (S40) in Bezug auf einen sekundären Schwellenwert (Vss) von mindestens einem Parameter (Pv), der in Abhängigkeit von mindestens einem Wert (Vmi) bestimmt wird, wobei jeder Wert (Vmi) aus mindestens einer physikalischen Größe resultiert, die für einen der Induktoren der Anordnung gemessen wird;
und wenn ein Ergebnis (Rs) des Schritts des sekundären Vergleichs positiv ist, während der bestimmte Parameter (Pv), der von mindestens einem Induktor der Anordnung wiedergegeben wird, mindestens teilweise von einem zu erhitzenden ferromagnetischen Element bedeckt ist, enthält das Verfahren:
- einen Schritt der Aktivierung (S50) jedes Induktors der Anordnung.

2. Verfahren nach Anspruch 1, wobei der Überprüfungsschritt einen Schritt der Lokalisierung (S12) jedes Induktors (10) enthält, auf dem ein ferromagnetisches Element in Bezug auf eine Kartierung der Induktoren des Kochfelds erfasst wird.

3. Verfahren nach einem der Ansprüche 1 oder 2, wobei der Erfassungsschritt (S11) für jeden Induktor des Kochfelds enthält:
- einen Schritt der Messung der mindestens einen physikalischen Größe für einen Induktor;
- einen Schritt der Bestimmung des Werts (Vmi) ausgehend von mindestens einer physikalischen Größe, die für den Induktor gemessen wird; und
- einen Schritt des Vergleichs des Werts (Vmi) mit einem vordefinierten Schwellenwert, Präsenzschwellenwert (Vsp) genannt;
wobei der Induktor (10) identifiziert wird, als mindestens teilweise von einem ferromagnetischen Element bedeckt, wenn ein Ergebnis des Vergleichs (Rd) des Erfassungsschritts (S11) positiv ist.

4. Verfahren nach einem der Ansprüche 1 bis 3, wobei der Parameter (Pv) für jeden Induktor (10) der Anordnung bestimmt wird.

5. Verfahren nach Anspruch 3 und 4, wobei das Ergebnis (Rs) des Schritts des sekundären Vergleichs (S40) negativ ist, wenn der Parameter (Pv) für jeden Induktor (10) der Anordnung zwischen dem sekundären Schwellenwert (Vss) und dem Präsenzschwellenwert (Vsp) liegt.

6. Verfahren nach einem der Ansprüche 1 bis 3, wobei der Parameter (Pv) für die Anordnung bestimmt wird.

7. Verfahren nach einem der Ansprüche 1 bis 6, ferner enthaltend:
- einen Schritt der Bestimmung (S20) einer Anzahl (Nbi) von Induktoren der Anordnung; und
- einen Schritt des Vergleichs (S30) der Anzahl (Nbi) der Induktoren der Anordnung in Bezug auf eine vordefinierte Anzahl (Nbs);
und wenn die Anzahl der Induktoren der Anordnung kleiner als die vordefinierte Anzahl ist, implementiert das Verfahren den Schritt des sekundären Vergleichs.

8. Verfahren nach Anspruch 7, wobei, wenn die Anzahl (Nbi) von Induktoren der Anordnung mindestens gleich der vordefinierten Anzahl (Nbs) ist, der Aktivierungsschritt (S50) jedes Induktors der Anordnung implementiert wird, und alle Induktoren der Anordnung aktiviert werden.

9. Verfahren nach Anspruch 7, wobei der sekundäre Schwellenwert (Vss) von der Anzahl der Induktoren der Anordnung (Nbi) abhängt.

10. Induktionskochfeld, das mindestens zwei Induktoren (10) enthält und eine Bedieneinheit, die konfiguriert ist, um das Verfahren nach einem der Ansprüche 1 bis 9 zu implementieren.

11. Kochfeld nach Anspruch 10, ferner eine elektronische Leistungsplatine enthaltend, die die Induktoren (10) speist, und wobei die Bedieneinheit konfiguriert ist, um die elektronische Leistungsplatine zu steuern.

## Claims

1. A method of operating an induction cooktop, the cooktop including at least two inductors, the method including:
- a step (S10) of identifying an assembly of adjacent inductors which are at least partially covered by a ferromagnetic element, the assembly including at least one inductor (10) which is at least partially covered, and the step (S10) of identifying the assembly including:
∘ a step (S11) of detecting a ferromagnetic element on an inductor, for each inductor of the cooktop; and
∘ if a ferromagnetic element is detected on at least two inductors, a step of checking if the at least two inductors are adjacent;
- a secondary comparison step (S40), relative to a secondary threshold (Vss), of at least one parameter (Pv) determined depending on at least one value (Vmi), each value (Vmi) resulting from at least one physical magnitude measured for one of the inductors of the assembly;
and if a result (Rs) of the secondary comparison step is positive, when the determined parameter (Pv) reflects that at least one inductor of the assembly is at least partially covered by a ferromagnetic element to be heated, the method includes:
- a step (S50) of activating each inductor of the assembly.

2. The method according to claim 1, wherein the check step includes a step (S12) of locating each inductor (10) on which a ferromagnetic element is detected relative to a map of the inductors of the cooktop.

3. The method according to any one of claims 1 or 2, wherein the detection step (S11) includes, for each inductor of the cooktop:
- a step of measuring at least one physical magnitude for an inductor;
- a step of determining the value (Vmi) from the at least one physical magnitude which is measured for the inductor; and
- a step of comparing the value (Vmi) with a predefined threshold, called presence threshold (Vsp);
the inductor (10) being identified as at least partially covered by a ferromagnetic element if a comparison result (Rd) of the detection step (S11) is positive.

4. The method according to any one of claims 1 to 3, wherein the parameter (Pv) is determined for each inductor (10) of the assembly.

5. The method according to claims 3 and 4, wherein the result (Rs) of the secondary comparison step (S40) is negative if the parameter (Pv) for each inductor (10) of the assembly is comprised between the secondary threshold (Vss) and the presence threshold (Vsp).

6. The method according to any one of claims 1 to 3, wherein the parameter (Pv) is determined for the assembly.

7. The method according to any one of these claims 1 to 6, further including:
- a step of determining (S20) a number (Nbi) of inductors of the assembly; and
- a step of comparing (S30) the number (Nbi) of inductors of the assembly relative to a predefined number (Nbs);
and if the number of inductors of the assembly is less than the predefined number, then the method implements the secondary comparison step.

8. The method according to claim 7, wherein if the number (Nbi) of inductors of the assembly is at least equal to the predefined number (Nbs), the step (S50) of activating each inductor of the assembly is implemented, and all inductors of the assembly are activated.

9. The method according to claim 7, wherein the secondary threshold (Vss) depends on the number of inductors in the assembly (Nbi).

10. An induction cooktop including at least two inductors (10) and a monitoring unit configured to implement the method according to any one of claims 1 to 9.

11. A cooktop according to claim 10, further including an electronic power board powering the inductors (10), and the monitoring unit being configured to control the electronic power board.
